# EUROPÄISCHE PATENTSCHRIFT

(11) **EP 0 929 416 B1**
(45) Veröffentlichungstag und Bekanntmachung des Hinweises auf die Patenterteilung: **17.01.2001**
(21) Anmeldenummer: 97942890.1
(22) Anmeldetag: 28.08.1997
(51) Int. Cl.: B60R 16/00

(54) **MIKROSCHALTERANORDNUNG FÜR BEDIENELEMENTE VON KRAFTFAHRZEUGSCHALTERN**
MICROSWITCH DEVICE FOR CONTROL ELEMENTS OF VEHICLE COMMUTATION SWITCHES
DISPOSITIF A MICRORUPTEURS POUR ELEMENTS DE COMMANDE DE COMMUTATEURS DE VEHICULE

(30) Priorität: 02.10.1996 DE 19640684
(43) Veröffentlichungstag der Anmeldung: 21.07.1999
(73) Patentinhaber: Valeo Schalter und Sensoren GmbH, 74321 Bietigheim-Bissingen (DE)
(72) Erfinder: MOZER, Reiner, D-71665 Vaihingen (DE); NEUBAUER, Walter, D-74348 Lauffen (DE)
(74) Vertreter: Dreiss, Fuhlendorf, Steimle & Becker
(86) Internationale Anmeldenummer: EP9704692
(87) Internationale Veröffentlichungsnummer: WO9814349

(56) Entgegenhaltungen:
- EP-A- 0 160 905
- EP-A- 0 345 161
- EP-A- 0 591 701
- WO-A-94/22687
- US-A- 3 934 101
- US-A- 4 045 667
- US-A- 4 723 057

## Beschreibung

Die Erfindung betrifft eine Mikroschalteranordnung für Bedienelemente von Kraftfahrzeugschaltern gemäß dem Oberbegriff des Anspruchs 1.

Es sind beispielsweise Mikroschalteranordnungen für Bedienelemente von Kraftfahrzeugschaltern bekannt, die mit mehreren stehend angeordneten Mikroschaltern aufgebaut sind (Lenkstockschalter der Firma VALEO mit der internen Bezeichnung 202 641). Diese Schalter sind entsprechend nur in eine Richtung zu betätigen. Um eine zweite Betätigungsrichtung zu ermöglichen, sind in den Bedienelementen dieses Kraftfahrzeugschalters Umlenkmechaniken angeordnet, die die Betätigungskraft von Schaltelementen zu den Mikroschaltern weiterleiten. Diese Mechaniken sind entweder als Schaltnocken mit schiefer Ebene am Schalter selbst oder als Bedienelemente am Gehäuse ausgeführt.

Diese zusätzlichen Umlenkelemente verkomplizieren den Aufbau der Bedienelemente dieses Kraftfahrzeugschalters. Die steigende Anzahl von Teilen erhöhen ebenfalls die Störanfälligkeit und die Fertigungskosten der Bedienelemente.

Aus der EP-A-0 160 905 ist ein Lenkstockschalter bekannt geworden, bei dem Leiterplatten vorgesehen sind, die im Winkel zueinander angeordnet sind. An der einen Leiterplatte ist über Kontaktstifte ein Druckschalter angebracht, wohingegen die senkrecht stehenden Leiterplatten jeweils Bestandteil eines Drehschalters sind. Auf diesen Leiterplatten fährt der Schleifkontakt des Schalters entlang.

Aus der EP-A-0 591 701 ist eine Bedienvorrichtung für elektrische Verbraucher in einem Fahrzeug bekannt geworden. Diese Bedienstation weist Sensor-, Schalt- und Steuerelemente auf.

Aus der WO-A-94 22 687 ist eine Anordnung für einen Tempomat für eine Fahrzeug bekannt geworden.

Ausgehend vom gattungsbildenden VALEO-Schalter 202 641 liegt der Erfindung die Aufgabe zugrunde, eine Mikroschalteranordnung der eingangs beschriebenen Art so aufzubauen, daß alle Schalter ohne Umlenkmechanismus direkt in Betätigungsrichtung ihres Schaltnockens zu betätigen sind.

Diese Aufgabe wird erfindungsgemäß durch eine Mikroschalteranordnung gelöst, die die Merkmale des Anspruchs 1 aufweist.

Das Prinzip der Erfindung besteht darin, die Mikroschalter auf einem Mikroschalterträger so anzuordnen, daß sie direkt in Betätigungsrichtung ihres Schaltnockens, ohne Umlenkmechanik, betätigt werden können. Der Aufbau der Mikroschalterträger ist in mehreren Varianten denkbar. Entsprechend den Montageerfordernissen kann der Träger aus verschiedenen, zusammengesetzten Leiterplatten bestehen.

Der Mikroschalterträger wird je nach Bedarf aus mehreren Leiterplattenteilen zusammengefügt. Die einzelnen Teile werden mit Hilfe einer Verzapfung verbunden. Über die Verzapfung laufen die miteinander verlöteten Leiterbahnen. Dadurch wird gleichzeitig eine mechanische Verbindung, die die Platinen zueinander positioniert, und ein elektrisch leitfähiger Kontakt zwischen den Plattenteilen hergestellt.

Das beschriebene Trägerkonzept erübrigt zusätzliche Umlenkungen für eine Betätigung in mehreren Richtungen. Dadurch wird der Aufbau von Bedienelementen für Kraftfahrzeugschalter vereinfacht und damit ihre Teile- und Fertigungskosten verringert. Zusätzlich wird die Störanfälligkeit ebenfalls herabgesetzt.

Eine nähere Erläuterung der Erfindung erfolgt nachfolgend anhand eines Ausführungbeispiels mit drei Figuren.

Es zeigen:
- Fig. 1: einen vertikalen Längsschnitt durch ein Ausführungsbeispiel eines Bedienelements für Lenkstockschalter;
- Fig. 2: einen horizontalen Längsschnitt durch ein Ausführungsbeispiel eines Bedienelements für Lenkstockschalter; und
- Fig. 3: Leiterplattenteile eines Mikroschalterträgers.

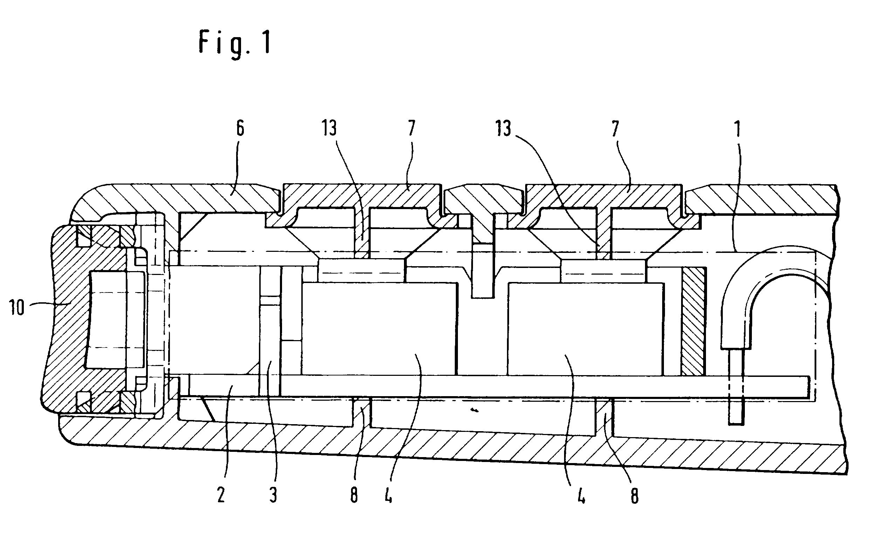

Die Baueinheit nach Fig. 1 besteht aus einem Gehäuse 6, einem Mikroschalterträger 1, Bedienelemente 7 und 10, nämlich Drucktastern 7 für die vertikale und einem Kipptaster 10 für die horizontale Betätigung von Mikroschaltern. Der Mikroschalterträger 1 ist aus einer horizontalen und einer vertikalen Leiterplatte 2 bzw 3 und den stehenden und liegenden Mikroschaltern 4 und 5 aufgebaut. Die Leiterplattenteile 2 und 3 des Trägers 1 sind durch eine Verzapfung 12 miteinander verbunden. Die über die Verzapfung 12 geführten Leiterbahnen 14 sind zur Kontaktierung miteinander verlötet. Die Mikroschalter 4 werden mit den als Drucktastern ausgebildeten Bedienelementen 7 über deren Stößel 13 direkt betätigt.

Der Träger 1 ist im Gehäuse 6 in vertikaler Richtung auf Rippen 8 gelagert, die die Betätigungskräfte auf die stehend montierten Mikroschalter 4 in vertikaler Richtung aufnehmen.

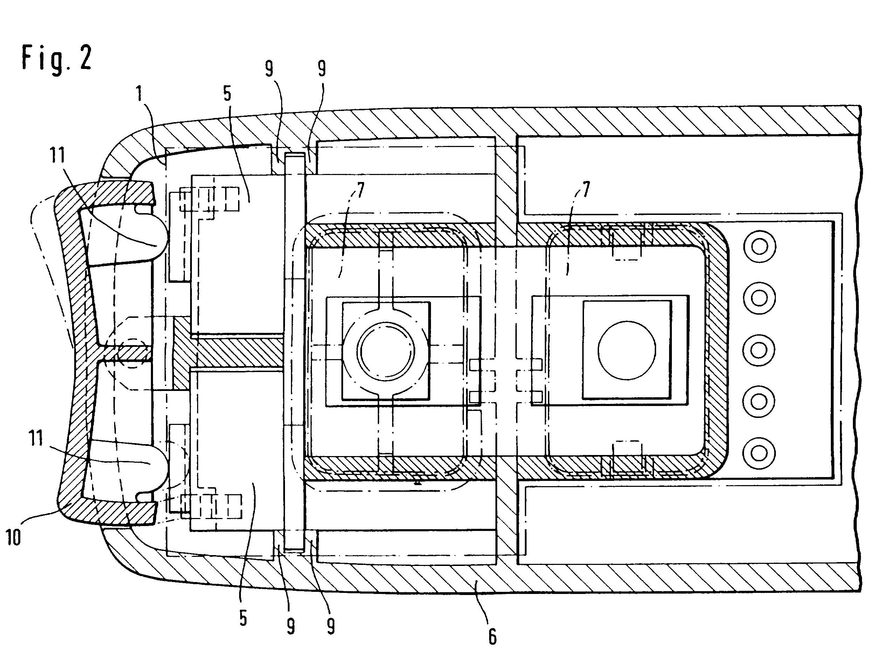

Fig. 2 zeigt einen horizontalen Schnitt der Baueinheit aus Fig. 1. Die liegenden Mikroschalter 5 werden mit Schaltnocken 11 des als Kipptaster 10 ausgebildeten Bedienelements betätigt. Die hier gezeigten Aufnahmerippen 9 fixieren den Mikroschalterträger 1 in horizontaler Richtung und nehmen zusätzlich die Betätigungskräfte für die liegenden Mikroschalter 5 auf.

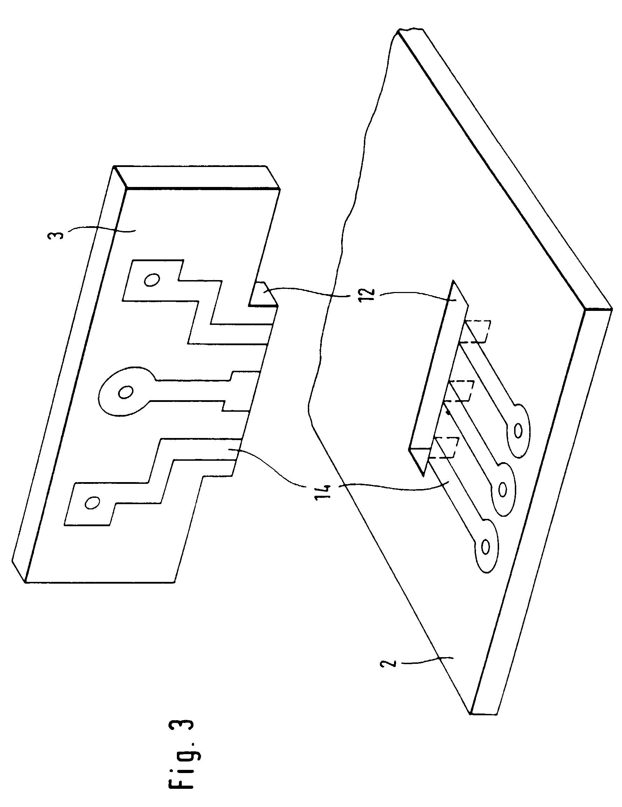

Fig. 3 stellt die Leiterplattenteile 2 und 3 des Mikroschalterträgers dar. Die Teile 2 und 3 sind mit einer Verzapfung 12 zum Zusammenfügen beider Teile ausgestattet. Durch Verlöten der Leiterbahnen 14 werden beide Platten elektrisch kontaktiert, mechanisch positioniert und fixiert.

## Patentansprüche

1. Mikroschalteranordnung mit mehreren Mikroschaltern (4, 5) auf Mikroschalterträgern (1), für in unterschiedliche Betätigungsrichtungen wirkende Bedienelemente (7, 10) von Kraftfahrzeugschaltern, insbesondere für Kraftfahrzeug-Lenkstockschalter, dadurch gekennzeichnet, daß der Mikroschalterträger (1) aus einer horizontalen Leiterplatte (2) und einer vertikalen Leiterplatte (3) aufgebaut ist, wobei die horizontale Leiterplatte (2) den einen Teil der Mikroschalter (4) stehend und die vertikale Leiterplatte (3) den anderen Teil der Mikroschalter (5) liegend tragen, und daß die Betätigungsrichtung der Bedienelemente (7, 10) der Betätigungsrichtung der Schaltnocken der Mikroschalter (4, 5) entspricht und die Bedienelemente (7, 10) direkt und ohne Umlenkmechanik an den Schaltnocken angreifen.

2. Mikroschalteranordnung nach Anspruch, dadurch gekennzeichnet, daß die Leiterplatten (2, 3) miteinander verklebt sind.

3. Mikroschalteranordnung nach einem der vorhergehenden Ansprüche, dadurch gekennzeichnet, daß die Leiterplatten (2, 3) mit Hilfe einer Verzapfung (12) zusammengefügt sind.

4. Mikroschalteranordnung nach Anspruch 3, dadurch gekennzeichnet, daß Leiterbahnen (14) über die Verzapfung (12) kontaktiert sind.

5. Mikroschalteranordnung nach Anspruch 4, dadurch gekennzeichnet, daß die Leiterbahnen (14) miteinander verlötet sind.

## Claims

1. Microswitch arrangement having a plurality of microswitches (4, 5) on microswitch carriers (1) for operating elements (7, 10), acting in various actuating directions, of motor vehicle switches, in particular for motor vehicle steering-column switches, characterized in that the microswitch carrier (1) is made up of a horizontal printed circuit board (2) and a vertical printed circuit board (3), wherein the horizontal printed circuit board (2) supports the one part of the microswitch (4) vertically and the vertical printed circuit board (3) supports the other part of the microswitch (5) horizontally, and in that the actuating direction of the operating elements (7, 10) corresponds to the actuating direction of the operating cams of the microswitches (4; 5) and the operating elements (7, 10) act directly and without an articulated mechanism on the operating cams.

2. Microswitch arrangement according to Claim 1, characterized in that the printed circuit boards (2, 3) are bonded together.

3. Microswitch arrangement according to one of the preceding claims, characterized in that the printed circuit boards (2, 3) are joined together with the aid of a mortise joint (12).

4. Microswitch arrangement according to Claim 3, characterized in that the conductor tracks (14) make contact across the mortise joint (12).

5. Microswitch arrangement according to Claim 4, characterized in that the conductor tracks (14) are soldered together.

## Revendications

1. Dispositif à microrupteurs, comportant plusieurs microrupteurs (4, 5) sur des supports (1) de microrupteurs, pour des éléments de commande (7, 10), qui agissent dans différentes directions d'actionnement, de commutateurs de véhicule automobile, notamment pour des commutateurs fixés à la colonne de direction d'un véhicule automobile, **caractérisé** en ce que le support (1) de microrupteurs est constitué d'une carte imprimée horizontale (2) et d'une carte imprimée verticale (3), la carte imprimée horizontale (2) portant une partie (4) des microrupteurs en position verticale et la carte imprimée verticale (3) portant l'autre partie (5) des microrupteurs en position horizontale, et en ce que la direction d'actionnement des éléments de commande (7, 10) correspond à la direction d'actionnement des cames de contact des microrupteurs (4, 5), et les éléments de commande (7, 10) agissent directement et sans mécanisme de renvoi sur les cames de contact.

2. Dispositif à microrupteurs selon la revendication 1, **caractérisé** en ce que les cartes imprimées (2, 3) sont mutuellement assemblées par collage.

3. Dispositif à microrupteurs selon l'une quelconque des revendications précédentes, **caractérisé** en ce que les cartes imprimées (2 3) sont réunies à l'aide d'un assemblage à tenon et mortaise (12).

4. Dispositif à microrupteurs selon la revendication 3, **caractérisé** en ce que des pistes conductrices (14) sont mises en contact au moyen de l'assemblage à tenon et mortaise (12).

5. Dispositif à microrupteurs selon la revendication 4, **caractérisé** en ce que les pistes conductrices (14) sont reliées par brasage.
